Europäisches Patentamt

(19) European Patent Office

Office européen des brevets

(11) Publication number: **0 169 936**
**B1**

(12) **EUROPEAN PATENT SPECIFICATION**

(45) Date of publication of patent specification: **31.08.88**

(21) Application number: **84113542.9**

(22) Date of filing: **09.11.84**

(51) Int. Cl.⁴: **C 11 B 5/00, A 23 L 3/34,**
**A 23 F 3/16, A 23 F 3/18**

(54) **Antioxidant compositions.**

(30) Priority: **15.12.83 US 561678**
**14.06.84 US 620754**

(43) Date of publication of application:
**05.02.86 Bulletin 86/06**

(45) Publication of the grant of the patent:
**31.08.88 Bulletin 88/35**

(84) Designated Contracting States:
**AT BE CH DE FR IT LI LU NL SE**

(56) References cited:
**DE-A-2 448 278**
**GB-A-1 055 550**
**US-A-3 959 497**
**79-07-J1266 FSTA 79038760; Z.V. KOROBKINA et al.: "Effect of preliminary treatment of raw materials on retention of vitamins in frozen fruit and vegetables" & KIEVSKII TORGOVO-EKONOMICHSKII INST.. KIEV, USSR;**

The file contains technical information submitted after the application was filed and not included in this specification

(73) Proprietor: **SOCIETE DES PRODUITS NESTLE S.A.**
**Case postale 353**
**CH-1800 Vevey (CH)**

(72) Inventor: **Mai, Jimbin**
**10, Maloney Lane**
**New Milford, Conn. 06776 (US)**
Inventor: **Chambers, Laura J.**
**West-Shore-Lake Waramaug**
**New Preston, Conn. 06777 (US)**
Inventor: **McDonald, Richard E.**
**3, Tead Road**
**Brookfield Center, Conn. 06805 (US)**

(56) References cited:
**KONSERVNAYA I OVOSHCHESUSHIL 'NAYA PROMYSHLENNOST', no. 5, 1978, pages 36-39 78-05-TO140 FSTA 78023632; P.A. DEWDNEY:**

**"Natural fat-soluble antioxidants" & SCIENTIFIC AND TECHNICAL SURVEYS, LEATHERHEAD FOOD RA, no. 96, 1977, 52PP 75-09-H1412 FSTA 75046916; N.N.**

Courier Press, Leamington Spa, England.

**0 169 936**

(58) References cited:

BEREZOVSKAYA et al.: "The effect of polyphenolic compounds and ascorbic acid on the colour of fruit juices" & VSESOYUZNYI NAUCHNO-ISSLEDOVATEL'SKII INSTITUT KONSERVNOI I OVOSHCHESUSHIL'NOI PROMYSHLENNOSTI, no. 21, 1974, pages 6-12

CHEMICAL ABSTRACTS, vol. 89, no. 15, 9th October 1978, page 475, no. 128039z, Columbus, Ohio, US; M.M. CHAKRABARTY et al.: "Utilization of chemicals from tea waste as antioxidants for fatty materials and their nutritional studies" & FATS OILS RELAT. FOOD. PROD. THEIR PREP., SYMP. 1976, (Pub. 1978), 112-116

CHEMICAL ABSTRACTS, vol. 82, no. 23, 9th June 1975, page 424, no. 153982q, Columbus, Ohio, US; M.A. BOKUCHAVA et al.: "Antioxidant properties of a brown tea pigment on margarine" & MASLO-ZHIR. PROM-ST. 1975, (2), 15-16

**Description**

The present invention relates to antioxidants for food substances, more particularly to antioxidants obtained by the extraction of tea leaves at temperatures of from 130°C to 210°C as in certain processes for the production of instant tea.

Lipid autoxidation occurring in foods has always been a concern for both food processors and consumers and the most common method used to inhibit lipid oxidation is the application of synthetic antioxidants which block the oxidative reactions. However, owing to toxicological and nutritional considerations, only a very few synthetic antioxidants are permitted in food applications, e.g., butylhydroxytoluene (BHT), butylhydroxyanisole (BHA), propyl gallate (PG) and t-butyl hydroquinone (TBHQ). Even these antioxidants are now being examined by regulatory agencies and consumer activists and these developments have urged the need to exploit new sources of natural antioxidants.

One natural product with excellent antioxidant properties, Rosemary AR, suffers from the disadvantage of having a very intensive characteristic herb flavour which may limit its use in some applications.

It is also reported in the literature that certain tea extracts have antioxidant properties, e.g., extracts of tea leaves, tea grounds, tea sweepings and tea wastes, but in all the tea extracts so far described, the antioxidant activity is generally very low and the application of each extract is limited to a restricted class of food materials.

For example, C.A. *82*, 153982q states that brown tea pigment has antioxidant properties in margarine and that ascorbic acid improved the antioxidant activity while C.A. *82*, 15397b states that yellow and brown tea pigments have antioxidant activity in confectionery fat. In addition, C.A. *89*, 128039z states that polyphenols isolated from tea sweepings by selective extraction with water, then chloroform and then ethylacetate are antioxidants in unsaturated or partially hydrogenated oils. However, none of these publications state that the extraction is carried out at elevated temperatures and, in fact, C.A. *82*, 15397b states that heating diminished the antioxidant effect. As far as we are aware, no study on the antioxidant properties of instant tea or the intermediate extracts produced during its manufacture has been documented. As is well known, in the production of instant tea, the tea leaves are usually extracted at temperatures of from 60°C to 120°C while GB—A—1055550 describes a process where extraction temperatures up to 205°C are used.

We have found, surprisingly, that when black tea leaves are at least partly extracted at temperatures from 130°C to 210°C and the resulting extract optionally treated with lecithin, ascorbic acid or tannase or further extracted with a water-immiscible organic solvent, the extracts formed have an antioxidant activity comparable with or superior to synthetic antioxidant systems, and they do not suffer from the intensive flavour problem of Rosemary AR. In addition, these extracts are effective in a much wider variety of food systems than tea extracts previously described as having antioxidant activity. Unlike conventional antioxidants, they are both oil and water soluble and this property is especially advantageous when the food systems are oil-in-water emulsions and water-in-oil emulsions. Still further, we have also found that these extracts, by soaking uncooked roast beef overnight in a tea extract solution of about .25% by weight, are useful in inhibiting the "warmed-over" flavor commonly associated with cooked roast beef which has been reheated.

Accordingly, the present invention provides a composition comprising a food susceptible to lipid oxidation and an extract formed by the aqueous extraction of black tea leaves wherein at least part of the extraction is carried out at a temperature from 130°C to 210°C, the amount of extract being such that the content of tea solids present is from 0.005% to 1.5% by weight based on the weight of food, said extract containing at least 5% by weight of polyphenols based on the weight of tea solids.

Food materials that may be stabilised against oxidation are, for example, frying oils and fats, potato flakes, bakery products, meat emulsions, precooked cereals, instant noodles, soybean milk, chicken products, emulsion products such as sausage, mayonnaise and margarine, frozen fish, frozen pizza, cheese and animal foods.

Instant tea is routinely prepared by the hot water extraction of tea leaves, for example, as described in *World Coffee and Tea*, April 1972, pages 54—57, "The practice of instant tea manufacture". In the present invention, similar extraction conditions used in instant tea manufacture are followed wherein at least part of the extraction of the tea leaves is carried out at a temperature of from 130°C to 210°C to obtain the tea extracts with valuable antioxidant properties. Those extracts as well as the spent tea leaves or residues remaining after extraction, and the instant tea powder have antioxidant properties. For convenience, the word "extract" used in this invention includes the instant tea powder, the spent tea leaves and residues after extraction. The concentrated extracts containing up to 15% tea solids, especially from 4% to 10% tea solids have especially good antioxidant activity.

In one particular process of making tea antioxidant, black tea leaves are extracted at a temperature from 80°C to 130°C to give an initial extract (Fraction I). The residual leaves are extracted at a temperature from 130°C to 210°C and centrifuged to give a second extract (Fraction II). Fraction I and Fraction II are combined and concentrated to give an approximately 5—10% tea concentrate which is cooled and the insoluble tannins separated therefrom to give a water soluble tea liquor (Fraction III). All fractions are further concentrated and dried. Preferably, the tea leaves are extracted at a temperature from 100°C to

3

**0 169 936**

125°C and especially from 105°C to 120°C, for a period from 10 minutes to 60 minutes to give the initial extract. The residual tea leaves are then milled, slurried and extracted again conveniently for a period from 5 to 60 minutes, preferably from 20 to 40 minutes, at a temperature from 130°C to 210°C, preferably from 145°C to 195°C, more preferably from 160°C to 185°C, and especially from 165°C to 180°C. Advantageously, the extraction at the higher temperatures is carried out under pressure, the preferred pressures used ranging from 1 bar at 130°C to 15 bars at 210°C. After this second extraction the tea residue is removed by centrifugation to yield Fraction II. In this process, Fraction I, Fraction II, Fraction III, the residual tea leaves and the ultimately produced instant tea all have significant antioxidant activity, and especially Fraction II and Fraction III.

In particular, appreciable antioxidant activity is possessed by the various extracts, the residual tea leaves and also the instant tea produced in the processes described in United States Patent No. 3,451,823.

Excellent antioxidant activity is obtained when the amount of polyphenols is at least 5% by weight and preferably at least 8% by weight based on the weight of tea solids.

The major phenolic constituents of the tea solids and the amounts of each usually present in the extracts are gallic acid (0.05 to 1.5%), epicatechin (0.01 to 0.5%), catechin (0.01 to 0.6%), epigallocatechin (0.01 to 0.75), epicatechin gallate (0.01 to 1.00%) and epigallocatechin gallate (0.01 to 1.5%), all the amounts being given as percentages by weight based on the weight of tea solids. The amount of extract present in the food is conveniently such that the tea solids content is from 0.008 to 1.00% by weight, preferably from 0.02 to 0.75% and especially from 0.05 to 0.5% by weight based on the weight of food. The tea extracts show antioxidative synergism in food either with ascorbic acid or with lecithin. The amount of ascorbic acid or lecithin used in a synergistic mixture may be from 0.02 to 2.00%, preferably from 0.05 to 1.00% by weight based on the weight of food, while the amount of extract is conveniently such that the solids content is from 0.01 to 0.5% by weight based on the weight of food.

In a preferred embodiment of the present invention, the tea extracts may be further extracted with a water-immiscible organic solvent capable of extracting at least a part of the polyphenols from the extracts, for example, by partitioning. Examples of such solvents are petroleum ether, pentane, diethyl ether, hexane, ethyl propionate, ethyl acetate, methyl iso-butyl ketone or halogenated hydrocarbons such as Freons. The extracted polyphenols may then be separated, for example, by removal of the solvent by rotary evaporation, and reconstituted with water and freeze-dried. Such polyphenol extracts have superior antioxidant activity and oil solubility to the tea extracts from which they are extracted.

In yet another embodiment of the present invention, the tea extracts may be treated with tannase to increase the antioxidant activity. The treatment with tannase is preferably carried out at pH from 4.0 to 5.5, especially from 4.5 to 5.0. The amount of the tannase used to treat the tea extract is not critical but usually an amount from 0.02% to 1.0% by weight based on the weight of tea solids is effective and conveniently an amount from 0.05% to 0.5% by weight based on the weight of tea extract may be used. The synergistic antioxidant effect with ascorbic acid is especially marked when the tea extracts are treated with tannase, especially at low levels of application, e.g., 0.02% to 0.05% by weight of solids based on the weight of food.

The following examples further illustrate the present invention.

Example 1

Black tea leaves were extracted at a temperature between 110°C and 120°C for 30 minutes to give Fraction I. The residual tea leaves were milled, slurried and then extracted at 190°C and a pressure of 11 bars for a further 30 minutes. This slurry was centrifuged and the supernatant was recovered as Fraction II. A combination of Fraction I and Fraction II was then concentrated to give a 5—10% tea concentrate which was cooled to a temperature of 15°C to precipitate the insoluble tannins. The tea liquor was then centrifuged and the insoluble tannins removed to give Fraction III.

Samples of Fraction II and Fraction III, respectively, were incorporated into separate 100 g batches of chicken fat in amounts such that the content of tea solids in each batch was 0.05% by weight based on the weight of the chicken fat. In addition, a mixture of Fraction II and ascorbic acid (AA) was incorporated into a further 100 g batch of chicken fat wherein the amount of Fraction II was such that the content of tea solids in the batch was 0.10% by weight based on the weight of chicken fat and the amount of ascorbic acid was 0.05% by weight based on the weight of chicken fat. As a comparison, 0.01 g of BHA was incorporated in a further 100 g batch of chicken fat. The antioxidative activity was determined by a modified Rancimat Method which is an accelerated oxidation test described by J. Frank. J. Geil and R. Freaso in "Food Technology 1982, Vol. 36, No. 6, p. 71", in chicken fat at 100°C. The oxidative stability of the chicken fat was determined by the induction period (IP), the time required for the fat to become rancid. To facilitate comparison of the data, the antioxidant index (AI), defined as the induction period of the treatment divided by the induction period of the control was used to report the effectiveness of the antioxidants. In the test, frozen chicken fat was melted directly over low heat on a stove top. The test antioxidants were incorporated directly into 100 g samples of the melted fat and homogenised. Ten gram samples of the control chicken fat, and chicken fat containing the antioxidant were then placed in the Rancimat reaction vessels for the accelerated oxidation test. The test temperature was 110°C instead of 100°C which is prescribed by the Rancimat Method noted above. This was the only modification made to the Rancimat procedure. The air flow rate was 20 litre/hr. The results are as shown in Table I:

4

TABLE I

| Antioxidant | AI |
|---|---|
| Fraction II | 3.6 |
| Fraction III | 5.0 |
| Fraction II and AA | 6.4 |
| BHA | 6.0 |

These results showed that the antioxidant activity of the tea extracts were comparable with that of a commercial synthetic antioxidant.

Example 2

Samples of Fraction I, Fraction II, residual tea leaves and Fraction III formed in the process described in Example 1 were incorporated into chicken fat at various concentrations and tested in exactly the same way as described in Example 1. The values of the antioxidant activity (AI) at the various concentrations given as the % content of tea solids present in the chicken fat are shown in Table II:

TABLE II

| Antioxidant | Tea solids (% concentration) | | | |
|---|---|---|---|---|
| | 0.05 | 0.10 | 0.50 | 1.0 |
| Fraction I | 1.5 | 1.8 | 3.4 | — |
| Fraction II | 3.6 | 6.2 | 13.2 | 15.6 |
| Residual tea leaves | 1.0 | 1.6 | 3.0 | 2.8 |
| Fraction III | 5.0 | 8.0 | 18.0 | 21.7 |
| Instant tea powder | 1.8 | 2.2 | 4.6 | 7.3 |

No flavour from the tea extracts was imparted to the chicken fat even at 1% concentration.

Example 3

Individual samples of Fraction II formed in the process described in Example 1, soy lecithin and mixtures thereof were incorporated into chicken fat at the concentrations indicated in Table III and tested in exactly the same way as described in Example 1. The induction period of the chicken fat without additives, the induction period of the chicken fat containing the specified additives, as well as the % synergism of the mixtures of Fraction II and soy lecithin are indicated in Table III.

TABLE III

| Sample | Induction period (hr) | % synergism |
|---|---|---|
| Control | 1.0 | — |
| Fraction II, 500 ppm | 3.0 | — |
| Lecithin*, 500 ppm | 1.2 | — |
| Fraction II, 500 ppm and lecithin, 500 ppm | 4.3 | 33.3 |
| Lecithin, 1000 ppm | 1.4 | — |
| Fraction II, 500 ppm and lecithin, 1000 ppm | 4.9 | 38.5 |

*Centrolex f lecithin, Central Soya

$$\% \text{ synergism} = \frac{100[(IM{-}IL){-}(IA{-}IL){-}(IS{-}IL)]}{(IM{-}IL)}$$

IL=Induction period of substrate
IA=Induction period of primary antioxidant
IS=Induction period of synergist
IM=Induction period of primary antioxidant/synergist

Example 4

Samples of Fraction I and Fraction II formed in the process described in Example 1 were each made into 3% aqueous solutions. To each solution were added two volumes of ethyl acetate to form two immiscible layers. The organic layer was collected and the procedure of extraction was repeated twice. The pooled organic layer was rotary evaporated and the residue freeze dried. The yield was 31% for Fraction I and 9% for Fraction II.

Samples of Fraction I, Fraction II, the organic extract of Fraction I (Fraction IA) and the organic extract of Fraction II (Fraction IIA) were incorporated into chicken fat at a solids content of 500 ppm and the antioxidant index (AI) was determined as described in Example 1. The results are given in Table IV and illustrate the improved antioxidant activity of the organic extract compared with the aqueous extract.

TABLE IV

| Instant tea extract | AI |
| --- | --- |
| Fraction I | 2.1 |
| Fraction II | 3.8 |
| Fraction IA | 7.8 |
| Fraction IIA | 11.6 |

Example 5

The effectiveness of Fraction II and solvent extracted Fraction II as prepared in Example 4 of the present invention was tested in pork by mixing each extract at a solids concentration shown in Table VI with 1000 g portions of fresh ground pork in a Hobart Mixer (Model Nr. K5-A) on a setting of 2 for 3 minutes. Fraction II was added to 20 ml water before being mixed with the pork whereas solvent extracted Fraction II was mixed with 2.5 ml ethanol and then incorporated into 20 ml water to aid dispersion. The tea antioxidants of the present invention were compared with the fat soluble antioxidants Rosemary AR and a mixture of BHA and BHT which were also mixed with 2.5 ml ethanol and then incorporated into 20 ml water before adding to the pork. 25 g portions of each batch of pork containing the antioxidants as well as a 25 g portion of fresh ground pork not containing any added antioxidants were packed in air-permeable plastic films and stored for one week at 4°C. The antioxidant effectiveness was evaluated by a sensory evaluation panel and the results are shown in Table VI.

TABLE VI

| Treatment | Rank | Comments |
| --- | --- | --- |
| Control (no additives) | 5 | Spoiled, rancid |
| Fraction II (1000 ppm) | 2 | Fresh meat aroma |
| Solvent extract (500 ppm) | 1 | Fresh meat aroma |
| Rosemary AR (500 ppm) | 4 | Rosemary odour |
| BHA (100 ppm) & BHT (100 ppm) | 3 | Slight off-odour |

Example 6

The effectiveness of a solvent extracted Fraction II as prepared in Example 4 of the present invention was tested in both pork and beef at a solids concentration of 250 ppm in 1000 g portions of fresh ground pork and beef. The solvent extracted Fraction II was mixed with 2.5 ml ethanol and then incorporated into 20 ml water before being mixed with the meat in a Hobart Mixer (Model Nr. K5-A) on a setting of 2 for 3 minutes. 25 g portions of each batch of pork and beef containing solvent extract as well as 25 g control portions of pork and beef not containing any added antioxidants were packed in air-permeable plastic films and stored for 8 days at 4°C. The antioxidant effectiveness was evaluated by the chemical TBA (thiobarbituric acid) method following as general guideline, the procedure of Tarladgis et al. 1960. J. Am. Oil Chem. Soc. 37:44. The results given in Table VII show clearly the superior antioxidant activity of the solvent extracts of the present invention.

TABLE VII

| Sample | TBA value* |
| --- | --- |
| Pork control | 0.44 |
| Pork+solvent extract | 0.22 |
| Beef control | 1.27 |
| Beef+solvent extract | 0.38 |

* mg malonaldehyde per 1000 g sample.

**Claims**

1. A composition comprising a food susceptible to lipid oxidation and a tea extract formed by hot aqueous extraction of black tea leaves characterised in that the tea extract is obtained by carrying out at least part of the extraction at a temperature from 130°C to 210°C, the amount of extract being such that the content of tea solids present is from 0.005% to 1.5% by weight based on the weight of food, said extract containing at least 5% by weight of polyphenols based on the weight of tea solids.

2. A composition according to Claim 1 characterised in that the tea extract contains from 4% to 10% tea solids by weight based on the weight of the extract.

3. A composition according to Claim 1 characterised in that the tea extract is obtained by extracting the black tea leaves at a temperature from 80° to 130°C to give an initial extract (Fraction I), extracting the residual leaves at a temperature from 130°C to 210°C to give a second extract (Fraction II) and combining Fractions I and II.

4. A composition according to Claim 3 characterised in that the tea extract is obtained by combining and concentrating Fractions I and II to give a 5—10% tea concentrate which is cooled and the insoluble tannins removed therefrom to give a third extract (Fraction III).

5. A composition according to Claim 1 characterised in that the amount of extract in the food is such that the tea solids content is from 0.008% to 1.00% by weight based, on the weight of food.

6. A composition according to Claim 1 characterised in that ascorbic acid or lecithin is also present in an amount up to 2% by weight based on the weight of food.

7. A composition according to Claim 1 characterised in that the tea extract is obtained by further extracting the said extract with a water immiscible organic solvent which extracts at least a part of the polyphenols from the extract, collecting the organic layer and then removing the organic solvent from the organic layer.

8. A composition according to Claim 1 characterised in that the tea extract is treated with tannase.

**Patentansprüche**

1. Zusammensetzung mit einem Gehalt an einem gegen Lipoxidation empfindlichen Nahrungsmittel und an einem durch heiße wäßrige Extraktion von schwarzen Teeblättern gebildeten Teextrakt, dadurch gekennzeichnet, daß der Teextrakt durch Ausführung wenigstens eines Teiles der Extraktion bei einer Temperatur von 130°C bis 210°C erhalten wird, daß eine derartige Extraktmenge vorliegt, daß der Anteil an vorliegenden Teefeststoffen von 0,005 bis 1,5 Gew.-%, bezogen auf das Gewicht des Nahrungsmittels, beträgt, und daß der Extrakt wenigstens 5 Gew.-% Polyphenole, bezogen auf das Gewicht der Teefeststoffe, enthält.

2. Zusammensetzung nach Anspruch 1, dadurch gekennzeichnet, daß der Teextrakt von 4 bis 10 Gew.-% Teefeststoffe, bezogen auf das Gewicht des Extraktes, enthält.

3. Zusammensetzung nach Anspruch 1, dadurch gekennzeichnet, daß der Teextrakt durch Exrahieren der schwarzen Teeblätter bei einer Temperatur von 80 bis 130°C unter Ausbildung eines Anfangsextraktes (Fraktion I), Extrahieren der zurückbleibenden Blätter bei einer Temperatur von 130 bis 210°C zur Ausbildung eines zweiten Extraktes (Fraktion II) und Vereinigen der Fraktionen I und II erhalten wird.

4. Zusammensetzung nach Anspruch 3, dadurch gekennzeichnet, daß der Teextrakt durch Vereinigen und Konzentrieren der Fraktionen I und II zu einem 5 bis 10%igen Teekonzentrat, das gekühlt und aus dem die unlöslichen Tannine unter Ausbildung eines dritten Extraktes (Fraktion III) abgetrennt werden, erhalten wird.

5. Zusammensetzung nach Anspruch 1, dadurch gekennzeichnet, daß die Extraktmenge in dem Nahrungsmittel derart ist, daß der Gehalt an Teefeststoffen von 0,008 bis 1,00 Gew.-%, bezogen auf das Gewicht des Nahrungsmittels, beträgt.

6. Zusammensetzung nach Anspruch 1, dadurch gekennzeichnet, daß zusätzlich Ascorbinsäure oder Lecithin in einer Menge bis zu 2 Gew.-%, bezogen auf das Gewicht des Nahrungsmittels, zugegen ist.

7. Zusammensetzung nach Anspruch 1, dadurch gekennzeichnet, daß der Teextrakt durch weiteres Extrahieren des genannten Extraktes mit einem mit Wasser nicht mischbaren organischen Lösungsmittel, welches wenigstens einen Teil der Polyphenole aus dem Extrakt extrahiert, Sammeln der organischen Phase und anschließendes Entfernen des organischen Lösungsmittels aus der organischen Phase erhalten wird.

8. Zusammensetzung nach Anspruch 1, dadurch gekennzeichnet, daß der Teextrakt mit Tannase behandelt wird.

**Revendications**

1. Composition comprenant un aliment sensible à l'oxydation des lipides et un extrait de thé formé par extraction aqueuse à chaud de feuilles de thé noir, caractérisée en ce que l'extrait de thé est obtenu en effectuant au moins une partie de l'extraction à une température comprise dans l'intervalle de 130°C à 210°C, la quantité d'extrait étant choisie de manière que la teneur en matières solides du thé soit comprise dans l'intervalle de 0,005% à 1,5% en poids sur la base du poids de l'aliment, ledit extrait contenant au moins 5% en poids de polyphénols sur la base du poids des matières solides du thé.

2. Composition suivant la revendication 1, caractérisée en ce que l'extrait de thé contient 4% à 10% en poids de matières solides du thé sur la base du poids de l'extrait.

3. Composition suivant la revendication 1, caractérisée en ce que l'extrait de thé est obtenu en soumettant les feuilles de thé noir à une extraction à une température comprise dans l'intervalle de 80° à 130°C, donnant un extrait initial (fraction I), en soumettant les feuilles résiduelles à une extraction à une température comprise dans l'intervalle de 130°C à 210°C, donnant un deuxième extrait (fraction II) et en mélangeant les fractions I et II.

4. Composition suivant la revendication 3, caractérisée en ce que l'extrait de thé est obtenu en mélangeant et en concentrant les fractions I et II, donnant un concentré de thé à 5—10% qui est refroidi et dont les tannins insolubles sont éliminés, donnant un troisième extrait (fraction III).

5. Composition suivant la revendication 1, caractérisée en ce que la quantité d'extrait dans l'aliment est choisie de manière que la teneur en matières solides du thé soit comprise dans l'intervalle de 0,008% à 1,00% en poids, sur la base du poids de l'aliment.

6. Composition suivant la revendication 1, caractérisée en ce que l'acide ascorbique ou de la lécithine est également présent en une quantité allant jusqu'à 2% en poids, sur la base du poids de l'aliment.

7. Composition suivant la revendication 1, caractérisée en ce que l'extrait de thé est obtenu en soumettant ledit extrait à une extraction supplémentaire au moyen d'un solvant organique non miscible à l'eau, qui extrait au moins une partie des polyphénols de l'extrait, en recueillant la phase organique, puis en éliminant de cette dernière le solvant organique.

8. Composition suivant la revendication 1, caractérisée en ce que l'extrait de thé est traité avec une tannase.